**Europäisches Patentamt**

**European Patent Office**

**Office européen des brevets**

(19)

(11) Publication number : **0 487 470 A2**

(12) # EUROPEAN PATENT APPLICATION

(21) Application number : **91830509.5**

(22) Date of filing : **21.11.91**

(51) Int. Cl.⁵ : **G09B 29/04**

(30) Priority : **22.11.90 IT 3611290 U**

(43) Date of publication of application :
**27.05.92 Bulletin 92/22**

(84) Designated Contracting States :
**AT BE CH DE DK ES FR GB GR IT LI LU NL SE**

(71) Applicant : **EDIZIONI ITER DI CESIRA LOZZI**
**S.S. Sublacense km. 13,8**
**I-00028 Subiaco (Roma) (IT)**

(72) Inventor : **Lozzi, Franco**
**Viale Trastevere, 118**
**I-00100 Roma (IT)**

(74) Representative : **Lanzoni, Luciano**
**c/o Bugnion S.p.A. Piazza dei Re di Roma, 21**
**I-00183 Roma (IT)**

(54) **A new structure for folding geographical map.**

(57)    The invention relates to a new structure for a folding geographical map comprising a plurality of sheets of paper or similar heavy synthetic material (10), constrained by one of the shorter sides (12) to a spine (20) which spine (20) permits of opening and freely rotating the sheets (10) around its axis ; each sheet (10) having a plurality of fold lines (30), made on alternating sides parallel to the said shorter sides (12) ; each of said plurality of sheets (10), all sheets (10) being constrained to the said spine (20) in the same way, having its first fold (31) at a successively ever growing distance from the said spine (20) with respect to the previous sheet (10), while successive folds (32) are at an equal reciprocal distance, causing each said sheet (20) to project over the edge of the preceding sheet (10) ; each said sheet (10) being extendable by orthogonal displacement away from the said spine (20), and refoldable upon itself along the said fold lines (30), by simple release and force of gravity.

Fig. 1

**EP 0 487 470 A2**

The invention relates to a new structure for a folding geographical, topographical, tourist or similar map, of the folding kind, reducible to the size of a small book.

The prior art embraces geographical and tourist maps which extend to considerable sizes, whether for the fact that they cover large areas of territory or for reasons connected with their scale, and this problem of size creates great difficulties in unfolding, reading and refolding, its being envisaged that this last action will be done in a rigidly pre-established way.

Furthermore, said conventional folding maps, in order to permit of increasing their amplitude while improving their ability to be folded in reasonable thicknesses, tend to be made with ever thinner and more flexible paper material: this exacerbates the above-mentioned difficulties and also reduces notably the map's durability, in particular along the fold lines.

Such problems have been at least in part resolved by having geographical or topographical maps made in the form of atlases, or in book-form, thus obviating the opening and closing problems and improving the solidity of the whole while, however, reducing the reading dimensions for each page. In fact, a serious limit of this atlas-type solution is the restricted space permitted to each single sheet, which, when the reference margins are taken into account, causes too-numerous interruptions in the maps, especially in large-scale maps where often the total territorial extension is not more than 100-200 km.

This book-type solution, though solving certain practical problems, creates others by not permitting an ample view of a total territory, and making it difficult to follow a road route over medium distances, thus obliging the user to consult the index frequently to obtain the correct pages in sequence, which pages are hardly ever in numbered succession.

The aim of the present invention is therefore to eliminate the above-described drawbacks by providing a new structure and conformation for geographical, topographical, tourist or similar maps, aimed at retaining the advantageous characteristics of the prior art maps, while avoiding the above-described problems and being characterised by a new, more usable and practical form of use.

The invention, as characterised in the claims which follow, solves the problem of realising a new structure of folding geographical map of the type comprising a plurality of sheets of paper or similar heavy synthetic material, each being rectangular in shape, with longer sides which are a multiple of their shorter sides, being constrained on one of the shorter sides to a spine, which spine permits of the opening and the free rotation of the sheets around its axis, each of said sheets having more than one fold-line, said fold-lines being made on alternating sides parallel to the said shorter sides; the first fold-line, counting from the spine, and the successive fold-lines, being between themselves equally distanced; said plurality of sheets, analogously constrained to said spine, having successively said first fold-lines at an ever-increasing distance from said spine; each sheet being folded according to the respective fold-lines projecting from the edge of the preceding, analogously folded sheet; a flat semirigid element being envisaged, constrained to the said spine in the same way as said sheets, and of dimensions which do not exceed said sheets, and placed underneath said sheets; each said sheet being independently unfoldable by a movememt perpendicular to said spine and being refoldable along the same fold-lines by simple force of gravity.

One of the advantages obtained by the present invention consists essentially in the fact that the sheets are folded according to one direction only, and can thus be unfolded easily, giving a wide full-view and, since they are made of heavy paper or similar synthetic material, because of the envisaged folds, they fold perfectly back on themselves by simple release and force of gravity.

Further characteristics of the invention will better emerge from the description which follows, of a preferred but not exclusive embodiment, here illustrated purely in the form of a non-limiting example in the accompanying drawings, in which:

– Figure 1 shows a general prospect of the invention;
– Figure 2 shows one utility form of the invention;
– Figure 3 shows a particular embodiment of the invention.

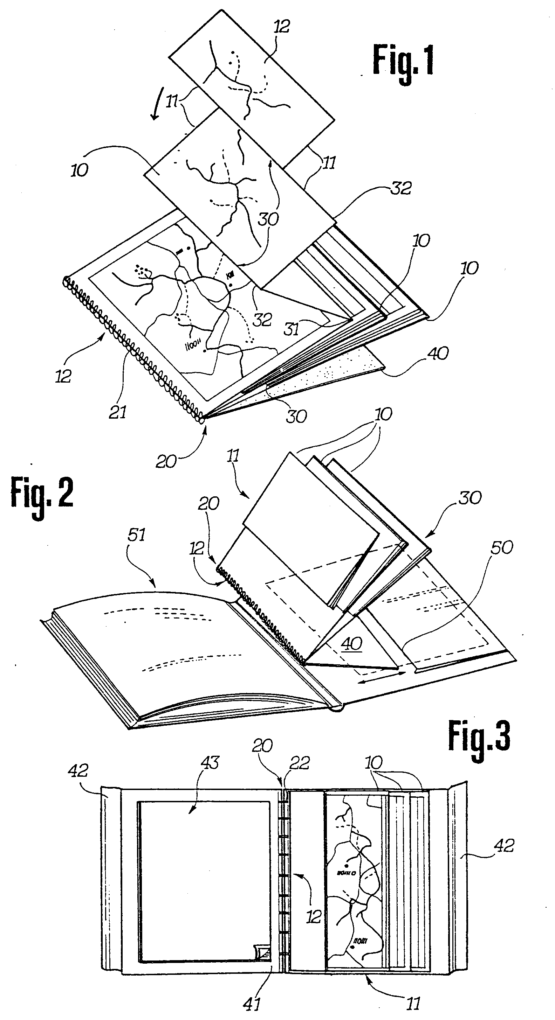

With reference to the drawings, fig. 1 shows a folding geographical map, according to the invention, comprising a plurality of sheets of paper or similar heavy synthetic material 10. The reason for envisaging the sheets of paper in rather heavy material will better emerge hereafter.

Each of said sheets 10 is rectangular in form, with longer sides 11 of multiple length and shorter sides 12, and said sheets 10 are hinged by one of the shorter sides 12 to a spine 20, said spine 20 having the function of permitting of opening the sheets 10 and of their rotating freely around the axis of the said spine (20).

Preferably, to obtain the above-mentioned functional characteristics, said spine 20 is of the spiral type 21 (figs. 1 and 2) or alternatively of the ring-type 22 (fig. 3), although other technically equivalent solutions are possible.

Said sheets 10 have a plurality of folds 30, made in alternating directions parallel to the said shorter sides 12; the first fold line 31, starting from said spine 20, and the successive fold lines 32 are equally distanced between themselves, while the sheets 10, together constrained to the said spine 20 successively have their first fold lines 31 made at an ever-growing distance from the said spine 20. Thus each each sheet 10 is folded according to the respective fold lines 30 and projects from the edge of the preceding sheet folded in the same way, as can be seen in the accompanying figures.

Said projections are very useful to distinguish and easily separate the various folded sheets 10, and they can also be utilised for noting down reference indications or similar.

As can be seen in figures 1 and 2, a semirigid flat element 40 is envisaged, constrained to the said spine 20 in the same way as the sheets 10; it must not be of a greater size than the said sheets 10 and it is placed under them in their consultation direction.

Each sheet 10 is thus singly unfoldable by orthogonal displacememt from the said spine 20 and is also independently refoldable on to itself along the said fold lines 30, in the respective directions, by simple release and force of gravity, as indicated in fig. 1.

This advantageous result is determined, apart from the particular fold lines 30 and the particular pre-chosen spine 20, essentially from the material from which the said sheets 10 are made, form paper or similar synthetic material, which should be heavy, advantageously not lighter than 130 gr./mq..

Also advantageously, said sheets 10 are made from plasticated paper or similar synthetic material suitable for being written upon with dry erasable inks, such as those to be found in shops in the form of markers; in any case, such inks as can be erased by hand or with a simple cloth. This characteristic of the invention, obviously very useful because of the ability it gives to the user to mark preferred routes or alternatives and reference points, is permitted by the particular form and folding system of the sheets 10 as well as the necessity of having the said sheets 10 of an adequate weight to stand this treatment.

Although not represented in the figures, said sheets 10 are printed on on both sides to obtain the maximum representative extension.

Said semirigid flat element 40, made preferably of cardboard, heavy paper or a similar synthetic material, functions as a rigid support for the opening and stretching-out of the sheets 10, but it is particularly destined to be inserted in corresponding pockets 50 in binders 51, diaries or similar, as illustrated in figure 2.

Alternatively, the flat semirigid elememt 40 can be made solid to a cover 41 which cover 41 may be the external cover for said plurality of sheets 10, spine 20 and the same flat semirigid element 40.

Such a cover, illustrated in figure 3 and indicated by the number 41, if in particular equipped with end flaps 42, functions as an ideal under-support for the sheets 10 when they are opened out, so that they can be more easily read; furthermore, to said cover 41 road routes or plans, travel diaries, telephone directories, service maps, and other aids (generically indicated by 43 in fig. 3) can be added independently, without that is interfering with the sheets 10 themselves; thus a complete travel atlas can be obtained.

## Claims

1. New structure for a folding geographical map, comprising a plurality of sheets of paper or similar heavy synthetic material (10), each of rectangular shape, with longer sides (11) of a size which is a multiple of their shorter sides (12), which sheets (10) are constrained by one of the shorter sides (12) to a spine (20), which spine (20) permits of the free rotation of the said sheets (10) around the axis of the said spine (20); said sheets (10) each having a plurality of folds (30) in alternated directions parallel to said shorter sides (12); the first fold-line (31), counting from the said spine (20), and the fold lines (32) successive to it being equally distanced one from the other; each of said plurality of sheets (10), also constrained to said spine (20) having said first fold-line (31) made at an ever-increasing distance from the said spine (20) with respect to the previous sheet (10), each said sheet (10) being thenceforward folded according to the respective folding lines (30) and thus projecting from the edge of the preceding analogously-folded sheet (10); a flat semirigid element (40) being envisaged, constrained to said spine (20) in the same way as the said sheets (10), said flat semirigid element (40) being of dimensions not greater than said sheets (10) and being placed underneath the same sheets (10); each said sheet (10) being singly unfoldable from said spine (20) by perpendicular displacement, and each sheet (10) being independently refoldable on itself along the same fold lines (30), in the respective directions, by simple release and force of gravity.

2. New structure for folding geographical maps, as in claim 1, wherein said sheets (10) are made of paper or similar heavy synthetic material weighing not less than 130 gr./mq.

3. New structure for folding geographical map, as in claim 1, wherein said sheets (10) are made of plasticated paper or similar synthetic material suitable to be written upon with dry erasable ink.

4. New structure for folding geographical map, as in claim 1, wherein said sheets (10) are printed on both faces.

5. New structure for folding geographical map, as in claim 1, wherein said spine (20) is of the spiral type (21).

6. New structure for folding geographical map, as in claim 1, wherein said spine (20) is of the ring type (22).

7. New structure for folding geographical map, as in claim 1, wherein said flat semirigid element (40) is made of cardboard, stiff paper or a similar synthetic material and is destined to be inserted in corresponding pockets (50) in files (51), diaries or similar.

8. New structure for folding geographical map, as in claim 1, wherein said flat semirigid element (40) is made of cardboard or a similar synthetic material and has its surface facing away from the said sheets (10) solid to a cover (41) for the containing and protection of said plurality of sheets (10), said spine (20) and said flat semirigid element (40).

9. New structure for folding geographical map, as in claim 8, wherein said cover (41) has, at least on one of its shorter sides (12), foldable end flaps (42), and that said cover (41) also has associated with it, and independently of said sheets (10) therefore not interfering with them, road routes or plans, travel diaries, telephone directories, service maps, and other aids (generically indicated by 43 in fig. 3).

Fig.1

Fig.2

Fig.3